(19) **Europäisches Patentamt / European Patent Office / Office européen des brevets**

(11) **EP 1 381 567 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**06.11.2013 Patentblatt 2013/45**

(45) Hinweis auf die Patenterteilung:
**14.05.2008 Patentblatt 2008/20**

(21) Anmeldenummer: **02737973.4**

(22) Anmeldetag: **18.04.2002**

(51) Int Cl.:
***C01F 7/00*** (2006.01)

(86) Internationale Anmeldenummer:
**PCT/EP2002/004352**

(87) Internationale Veröffentlichungsnummer:
**WO 2002/085787 (31.10.2002 Gazette 2002/44)**

(54) **VERFAHREN ZUR HERSTELLUNG VON HYDROTALCITEN**

METHOD FOR PRODUCING HYDROTALCITES

PROCEDE DE PRODUCTION D'HYDROTALCITES

(84) Benannte Vertragsstaaten:
**AT BE CH CY DE DK ES FI FR GB GR IE IT LI LU MC NL PT SE TR**

(30) Priorität: **19.04.2001 DE 10119233**

(43) Veröffentlichungstag der Anmeldung:
**21.01.2004 Patentblatt 2004/04**

(73) Patentinhaber: **Clariant Produkte (Deutschland) GmbH**
**65929 Frankfurt/Main (DE)**

(72) Erfinder:
- **EISGRUBER, Max**
  **84079 Bruckberg (DE)**
- **LADEBECK, Jürgen**
  **Louisville, KT 40232 (US)**
- **KOY, Jürgen**
  **83109 Grosskarolinenfeld (DE)**
- **SCHIESSLING, Hubert**
  **84034 Landshut (DE)**
- **BUCKL, Wolfgang**
  **85413 Hörgertshausen (DE)**
- **EBERT, Herrmann**
  **84036 Landshut (DE)**

(74) Vertreter: **HOFFMANN EITLE**
**Patent- und Rechtsanwälte**
**Arabellastrasse 4**
**81925 München (DE)**

(56) Entgegenhaltungen:

| | |
|---|---|
| WO-A-01/12550 | WO-A-93/22237 |
| WO-A-96/05140 | WO-A1-01//12550 |
| WO-A1-93//22237 | WO-A1-99//08962 |
| WO-A1-02//068329 | JP-A- 6 107 717 |
| JP-A- 6 311 902 | US-A- 5 250 279 |
| US-A- 5 250 279 | |

- ISUPOV ET AL.: 'Mechanochemical Synthesis of Double Hydroxides' JOURNAL OF MATERIALS SYNTHESIS AND PROCESSING Bd. 8, Nr. 3/4, 2000, Seite 251
- FIGUSCH ET AL.: 'Synthesis of spinel-magnesia ceramics from finely milled mixtures of magnesite $MgCO_3$ and gibbsite $Al(OH)_3$' PROCESSING OF THE 1ST INTERNATIONAL CONFERENCE ON MECHANOCHEMISTRY Seiten 81 - 85
- KLUWER ACADEMIE PUBLISHERS: 'Introduction: Ten years after the first international conference on mechanochemistry and mechanical alloying; where we are now' JOURNAL OF MATERIALS SCIENCE Nr. 39, 2004, Seiten 4985 - 4986
- PROF.DR.J. FALBE, PROF.DR.M. REGITZ: 'Römpp Chemie Lexikon', Bd. 9 BAND 3, 1990, GEORG THIEME VERLAG, STUTTGART-NEW YORK

EP 1 381 567 B2

**Beschreibung**

Die Erfindung betrifft ein Verfahren zur Herstellung von Hydrotalciten aus Verbindungen von zwei- und dreiwertigen Metallen.

Der in der Natur vorkommende Hydrotalcit leitet sich vom Mineral Brucit ab und genügt folgender Idealformel:

$$[Mg_6 Al_2 (OH)_{16}] CO_3 \cdot n\ H_2O$$

Im Hydrotalcit sind einige Magnesiumionen durch Aluminiumionen ersetzt, wodurch die Einzelschicht eine positive Ladung erhält. Diese wird durch Carbonat-Anionen ausgeglichen, die sich zusammen mit Kristallwasser in den Zwischenschichten befinden.

In synthetischen Hydrotalciten kann das Magnesium ganz oder teilweise durch Zink, Calcium, Eisen(II), Kobalt, Kupfer, Cadmium, Nickel und/oder Mangan und das Aluminium ganz oder teilweise durch Eisen(III), Bor, Mangan, Wismut und/oder Cer ersetzt sein.

In der Literatur finden sich prinzipiell drei verschiedene Synthesewege für Hydrotalcite.

Die älteste Methode ist die Copräzipitation von Lösungen zwei- und dreiwertiger Metalle in Anwesenheit eines Anions. Der pH-Wert wird dabei entweder konstant gehalten oder beginnend entweder im stark sauren oder stark alkalischen Bereich zu neutralen bis schwach basischen Werten hin verschoben. Es schliesst sich eine Hydrothermalbehandlung an. Diese Methode funktioniert bei praktisch allen darstellbaren Hydrotalciten. Eine Zusammenfassung solcher Copräzipitations-Synthesen findet sich z.B. in "Catalysis Today" 11(2),(1991), Seiten 173 bis 301, insbesondere Seiten 201 bis 212. Diese Verfahren sind bezüglich der technischen Anwendung beschränkt, da sie zum Teil eine bestimmte Qualität der löslichen Rohstoffe (Rohstoffkosten) und eine Vorbehandlung der Rohstoffe (Synthesedauer) erfordern und apparativ sehr aufwendig sind. Außerdem entstehen bei der Umsetzung als Nebenprodukte lösliche Salze, wie Natriumchlorid, die entweder aus dem Niederschlag des Vorproduktes oder aus dem Endprodukt ausgewaschen werden müssen, was größere Mengen an Waschwasser erfordert und die Salzfracht des Abwassers erhöht. Zu den gebräuchlichsten und billigsten löslichen Salzen gehören die Chloride der Metalle. Chloride führen in den Anlagenteilen zu starker Korrosion. Anlagenteile, die mit diesen Rohstoffen in Kontakt kommen, müssen dafür ausgelegt werden. Im allgemeinen kommen nur Titan-Ausrüstungen oder Beschichtungen in Frage. Das führt zu hohen Kosten für die Ausrüstung der Anlage.

Die Salz-Oxid-Methode beschreibt die Umsetzung eines Metallsalzes mit dem Oxid oder Hydroxid des anderen Metalls. Mit Säuren oder Laugen wird der pH am Ende auf einen optimalen Wert eingestellt. In der Regel liegt dieser Wert im neutralen bis schwach basischen Bereich. Beispielsweise kann MgO mit $AlCl_3$ zu Hydrotalcit umgesetzt werden. Bei geschickter Wahl der Rohstoffe ergibt sich ein Kostenvorteil gegenüber der Copräzipitation, da die Oxide in der Regel günstiger als die löslichen Salze sind. Auch das Abwasser enthält weniger Salze. Einer der Nachteile dieser Methode liegt in dem Problem, dass die Herstellung phasenreiner Produkte nur schwer gelingt.

Die dritte Methode umfasst die Umsetzung von Oxiden, Hydroxiden oder Carbonaten der zwei- und dreiwertigen Metalle. In der Patentliteratur, wie der DE 20 61 114, der US 5,399,329 und der US 5,578,286 finden sich Beispiele für diese Methode. Neben vergleichsweise niedrigen Rohstoffkosten gibt es relativ wenig Salze im Abwasser.

V.P. Isupov, L.E. Chupakhina und R.P. Mitrofanova J. Mater. synth. Proc. Vol. 8, Nr. 3/4, 2000, 251 - 253 berichten über eine Festkörpersynthese zur Herstellung von Doppelschichthydroxiden. Dabei werden die Edukte trocken mechanisch aktiviert, indem eine Mischung aus Magnesiumhydroxid und einem Aluminiumsalz in einem Aktivator bei einer Beschleunigung von 60 g behandelt werden.

V. Figusch und E. Burianova, Proceedings of the First International Conference on Mechanochemistry, S. 81-85 beschäftigt sich mit der Herstellung von Spinel-Magnesiumoxidkeramiken aus feinvermahlenen Gemischen von Magnesit und Gibbsit. Soweit auch Hydrotalcit erzeugt wird, werden wässrige Suspensionen von $MgCO_3 \cdot 2\ Al(OH)_3$ (MA) und $3\ MgCO_3 \cdot Al(OH)_3$ (3 MA) Gemischen mit etwa 20 Gew.-% Feststoffen in einem Attritor über 3 Stunden vermahlen und dann bei 105°C getrocknet.

Die EP 0 117 289 A1 beschreibt ein kristallines basisches Aluminium-Magnesium-Carbonat der Formel $Al_2Mg_6 (OH)_{12}(CO_3)_3 \cdot H_2O$.

Die WO 01/12570 beschreibt unter anderem die Herstellung eines abriebfesten geformten Körpers, enthaltend kristallinen anionischen Ton, durch Mischung von MgO mit Gibbsit oder amorphem Aluminagel. Es wird eine optionale Homogenisierung der Slurry beschrieben. Anschließend erfolgt eine Calcinierung, Resuspendierung und Alterung der Formkörper.

Zusammenfassend ist beim Einsatz preiswerter Rohstoffe bislang in der Regel keine hohe und konstante Produktqualität herstellbar. Aus dem Stand der Technik müssen dabei folgende wesentliche Nachteile abgeleitet werden: Hohe Kosten der eingesetzten Rohstoffe: Lösliche Salze werden in Form von Lösungen (z.B. $MgCl_2$- Lösung oder $AlCl_3$-Lösung) oder Feststoffen angeboten. Feste Produkte von löslichen Salzen sind teurer als ihre Lösungen und aus wirtschaftlicher Sicht nicht einsetzbar. Ihr Metallgehalt ist aufgrund des allgemein hohen Anionenanteils gering (z.B. $MgCl_2$

· 6H$_2$ O: ca. 11% Mg-Gehalt). Soweit Oxide oder Hydroxide der Metalle eingesetzt werden sollen, müssen diese aber für eine erfolgreiche Umsetzung sehr reaktiv sein. Das führt wiederum zu hohen Rohstoffpreisen.

Ziel bei der Planung neuer Anlagen ist unter anderem ein schonender Umgang mit Ressourcen und der Umwelt. Beim Einsatz von Salzlösungen sind die Transportkosten aufgrund des relativ geringen Wirkstoffgehaltes unverhältnismäßig hoch. Die Anionen-Anteile, die nicht im Produkt eingebaut werden, gelangen ins Abwasser.

Nach dem Stand der Technik werden möglichst aktive Rohstoffe eingesetzt, insbesondere, wenn Suspensionen von Feststoffen eingesetzt werden sollen. Bei aktiven Rohstoffen ist die Lagerfähigkeit begrenzt.

Die aktiven Rohstoffe sind in einer Anlage schwieriger zu handhaben. Die Verarbeitung dieser aktiven Rohstoffe ist auch deshalb problematisch, da sich durch unterschiedliche Standzeiten in der Anlage die Reaktivitäten stark verändern. Dadurch treten im Endprodukt (Hydrotalcit) starke Qualitätsschwankungen auf. Beispielsweise bindet MgO in Wasser unter starker Wärmeentwicklung ab. Bei zu langen Standzeiten bzw. wenn Anlagenstörungen auftreten, stellt eine wässrige MgO-Suspension daher ein Sicherheitsrisiko dar. Speziell MgO ist als aktiver Rohstoff schwierig zu handhaben. Die aktiven Spezies sollten als Suspensionen mit niedrigen Feststoffgehalten eingesetzt werden. Bei zu stark verdünnten Suspensionen erhöhen sich allerdings die Kosten im Bereich der Ansätze, weil größere Volumina behandelt werden müssen (Kesselgröße, Pumpaggregate, Rührorgane).

Eine andere Schwierigkeit ergibt sich z.B. bei Einsatz von Aluminium in Form von billigen und leicht erhältlichen Aluminat-Lösungen. Sie sind mit Zucker-Derivaten stabilisiert, damit während der Lagerung keine Auskristallisation von Al(OH)$_3$ auftritt. Die Zucker werden nicht in das Produkt eingebaut und gelangen ins Abwasser. Hier erhöhen sie den CSB-Wert über die zulässigen Grenzwerte. Billige Qualitäten von Natriumaluminat-Lösungen weisen schwankende Wirksubstanzgehalte auf.

Bei Verwendung wenig reaktiver Rohstoffe gelingt es andererseits nicht, den Hydrotalcit mit hoher Phasenreinheit.herzustellen. Es sind Phasen der Ausgangsstoffe zu finden, oder andere Phasen, die auf unvollständige Umsetzung der Rohstoffe hinweisen. Die Qualität der erhaltenen Hydrotalcite ist für bestimmte Anwendungen, z.B. als Stabilisator für PVC, oft nicht ausreichend.

Aufgabe der Erfindung war es nun, ein Verfahren zur Herstellung von Hydrotalciten bereit zu stellen, dass den vorteilhaften Einsatz kostengünstiger und umwelttechnisch unbedenklicher Ausgangsmaterialien bei der Hydrotalcitherstellung ermöglicht, die vorstehenden Nachteile des Standes der Technik vermeidet und dennoch qualitativ hochwertige Hydrotalcite liefert.

Diese Aufgabe wird durch das Verfahren gemäß Anspruch 1 gelöst. Bevorzugte Ausführungsformen sind in den Unteransprüchen angegeben.

So wurde überraschenderweise ein Verfahren zur Herstellung von Hydrotalciten unter Verwendung mindestens einer Verbindung eines zweiwertigen Metalls (Komponente A) und mindestens einer Verbindung eines dreiwertigen Metalls (Komponente B) gefunden, wobei zumindest eine der vorstehenden Komponenten nicht in Form einer Lösung eingesetzt wird, dadurch gekennzeichnet, dass man a) zumindest eine der nicht als Lösung eingesetzten Komponenten A und B kurz vor oder während der Vermischung der Komponenten, und/oder b) die Mischung mit den Komponenten A und B, einer Intensivmahlung bis zum Erreichen einer mittleren Teilchengröße (D$_{50}$) von etwa 0,1 bis 5 $\mu$m, insbesondere 0,5 bis 5 $\mu$m, vorzugsweise 1 bis 5 $\mu$m, unterzieht, wobei der Feststoffgehalt der zur Intensivvermahlung eingesetzten Suspension(en) mit den Komponenten A oder B bzw. der Mischsuspension mit beiden Komponenten etwa 30 bis 60 Gew.-% beträgt, und man vor oder während der Vermischung bzw. Umsetzung der Verbindungen der Komponenten A und B mindestens eine Carbonatquelle, insbesondere Kohlendioxid, in einer Menge von 1,0 bis 2,0 Mol CO$_2$ bzw. Carbonat/Mol eingesetzte dreiwertige Metalle zufürt, und man gegebenenfalls nach einer Alterungsbehandlung oder hydrothermalen Behandlung das erhaltene Hydrotalcitprodukt abtrennt und trocknet. Die mittlere Teilchengröße (D$_{50}$-Wert, d.h. 50% der vorhandenen Teilchen haben eine kleinere Teilchengröße als die angegebene Teilchengröße) nach der Intensivmahlung kann nach einer bevorzugten Ausführungsform auch bei etwa 3 $\mu$m oder weniger, insbesondere etwa 2 $\mu$m oder weniger liegen.

Vorzugsweise liegt der D$_{90}$-Wert (d.h. 90% der vorhandenen Teilchen haben eine kleinere Teilchengröße als die angegebene Teilchengröße) nach der Intensivmahlung bei 1 bis 5 $\mu$m, insbesondere 1,5 bis 4 $\mu$m, besonders bevorzugt 1,5 bis 3,5 $\mu$m.

Als Hydrotalcit wird vorliegend eine Doppelschichthydroxid-Verbindung der nachstehenden allgemeinen Summenformel verstanden:

$$A_W B_X (OH)_Y C_Z \cdot n\, H_2O,$$

worin A ein zweiwertiges Metallkation, B ein dreiwertiges Metallkation und C ein ein- oder mehrwertiges Anion darstellt und auf w, x, y, z und n die folgenden Bedingungen zutreffen: $0 < z \le x \le 4 \le w \le \frac{1}{2}\, y$ und $12 \ge n \ge 0$.

Darunter fallen auch Verbindungen der Formel $A_6 B_2 (OH)_{16} C_z \cdot 4H_2O$, worin A ausgewählt ist aus: Mg$^{2+}$, Fe$^{2+}$ und Zn$^{2+}$; B ist ausgewählt aus: Al$^{3+}$, Fe$^{3+}$ und Cr$^{3+}$; und C aus einer Liste von Anionen, die enthält: OH$^-$, Cl$^-$, Br$^-$; NO$_3^-$, CH$_3$COO$^-$, CO$_3^{2-}$, SO$_4^{2-}$, PO$_4^{2-}$, Fe(CN)$_6^{4-}$ und einigen Boraten, Carboxylaten und Polyoxometallaten, wobei $\frac{1}{2} \le z \le 2$

(in Abhängigkeit von der Ladung des substituierten Anions).

Bevorzugte Ausführungsformen der Erfindung betreffen die eingangs erwähnten von der Idealformel $[Mg_6 Al_2 (OH)_{16}) CO_3 \cdot n H_2O$ abgeleiteten Verbindungen. Im Hydrotalcit sind gegenüber Brucit einige Magnesiumionen durch Aluminiumionen ersetzt sind, wodurch die Einzelschicht eine positive Ladung erhält. Diese wird durch Carbonat-Anionen ausgeglichen, die sich zusammen mit Kristallwasser in den Zwischenschichten befinden. In synthetischen Hydrotalciten kann dabei das Magnesium ganz oder teilweise durch Zink, Calcium, Eisen(II), Kobalt, Kupfer, Cadmium, Nickel und/ oder Mangan und das Aluminium ganz oder teilweise durch Eisen(III), Bor, Mangan, Wismut und/oder Cer ersetzt sein. Das in den Zwischenschichten primär vorhandene Carbonat kann bei den erfindungsgemäßen Hydrotalciten nachträglich ganz oder teilweise durch ein oder mehrere der vorstehenden Anionen ausgetauscht werden, einschließlich von Anionen mit organischen Resten.

Mit der vorliegenden Erfindung können vorteilhafterweise billige, am Markt leicht erhältliche inaktive Standard-Rohstoffe zur Herstellung von qualitativ hochwertigen Hydrotalciten eingesetzt werden. Die erfindungsgemäß hergestellten Hydrotalcite weisen insbesondere eine Phasenreinheit von > 90%, insbesondere > 95%, besonders bevorzugt > 98% auf, bestimmt nach der Methode ASTM C 1365-98. Der Prozess läuft sicher und belastet die Umwelt (speziell das Abwasser) nur sehr geringfügig.

Weiterhin ermöglicht das erfindungsgemäße Verfahren die Herstellung von feinteiligen, pulverförmigen Hydrotalciten, insbesondere mit einer mittleren Teilchengröße ($D_{50}$) im Bereich von 0,1 bis 2$\mu$m, insbesondere 0,1 bis 1$\mu$m, besonders bevorzugt 0,5 bis 1$\mu$m.

Als inaktive Rohstoffe werden dabei solche bezeichnet, die unlöslich sind, d.h. eine Löslichkeit im verwendeten Reaktionsmedium bzw. Lösungsmittel, vorzugsweise Wasser, bei 25 Grad Celsius und pH 6 bis 7 von weniger als 5 x $10^{-8}$, insbesondere von weniger als 1 x $10^{-9}$, bevorzugt weniger als 5 x $10^{-10}$, aufweisen. Die BET-Oberfläche (DIN 66132) solcher Materialien liegt allgemein unter 30 $m^2$/g, vorzugsweise unter 10 $m^2$/g, insbesondere unter etwa 6 $m^2$/g. Solche Produkte sind verhältnismäßig lagerstabil, leicht handhabbar und allgemein kostengünstiger als aktive Produkte. Die inaktiven Rohstoffe können überraschenderweise mit der Intensivmahlung nach dem erfindungsgemäßen Verfahren kostengünstig aktiviert und zu einem hochqualitativen Hydrotalcit umgesetzt werden. Beispiele solcher inaktiver Rohstoffe sind die Oxide, Hydroxide und Carbonate der zwei- und dreiwertigen Metalle, bevorzugt von Magnesium und Zink, wobei unter dem Ausdruck "Carbonate" sowohl die neutralen Carbonate (z.B. $MgCO_3$) als auch die basischen Carbonate (z.B. Magnesia alba bzw. die Bicarbonate (z.B. $Mg(HCO_3)_2$) verstanden werden sollen. Besonders bevorzugt sind auch die Oxide von Zink und die Oxide von Aluminium.

Diese unlöslichen (inaktiven) Rohstoffe (Komponenten A bzw. B, die nicht als Lösung eingesetzt werden) werden vorzugsweise als Suspensionen eingesetzt.

Erfindungsgemäß wird mindestens eine Quelle eines zweiwertigen Metalles und mindestens eine Quelle eines dreiwertigen Metalles verwendet. Dabei kann jeweils eine oder mehr als eine Verbindung verwendet werden, wobei unterschiedliche zwei- bzw. dreiwertige Metalle enthalten sein können.

Bevorzugte zweiwertige Metalle sind, ohne hierauf beschränkt zu sein: $Mg^{2+}$, $Ca^{2+}$, $Zn^{2+}$, $Mn^{2+}$, $Co^{2+}$, $Ni^{2+}$, $Fe^{2+}$, $Sr^{2+}$, $Ba^{2+}$ und/oder $Cu^{2+}$.

Bevorzugte dreiwertige Metalle sind, ohne hierauf beschränkt zu sein: $Al^{3+}$, $Mn^{3+}$, $Co^{3+}$, $Ni^{3+}$, $Cr^{3+}$, $Fe^{3+}$, $Ga^{3+}$, $Sc^{3+}$, $B^{3+}$ und/oder dreiwertige Kationen von Seltenerdenmetallen.

Durch die Intensivmahlung wird die Reaktionsfähigkeit der nicht als Lösung eingesetzten Verbindungen der zwei- und dreiwertigen Metalle, insbesondere der o.g. inaktiven Rohstoffe, wie der unlöslichen Carbonate, Oxide und/ oder Hydroxide der zweiwertigen Metalle bzw. der Oxide und Hydroxide der dreiwertigen Metalle sehr stark erhöht und überraschend gute Hydrotalcitumsetzungen und -qualitäten ermöglicht. Dabei wurde überraschend gefunden, dass zur Erzielung besonders guter Ergebnisse die Intensivmahlung so durchgeführt werden sollte, dass sich eine mittlere Teil-chengröße ($D_{50}$) zwischen etwa 0,1 bis 5$\mu$m, insbesondere 0,4 bis 2$\mu$m, besonders bevorzugt 0,4 bis 1,1$\mu$m, ergibt. Die bevorzugten $D_{90}$-Werte liegen bei 1 bis 10$\mu$m, insbesondere 1 bis 5$\mu$m, besonders bevorzugt 1,5 bis 2,5$\mu$m. Da in der Regel von inaktiven Rohstoffen mit einer wesentlich höheren mittleren Teilchengröße als nach der Intensivmahlung ausgegangen wird, erfolgt über die erfindungsgemäße Intensivmahlung eine deutliche Zerkleinerung der Teilchen, in der Regel um mindestens etwa 30%, nicht lediglich eine Homogenisierung bzw. Mischung der Suspension.

Es wird angenommen, dass die intensiv vermahlenen Teilchen ein besonders vorteilhaftes Oberflächen/Volumenverhältnis aufweisen, das die nachfolgende Umsetzung zu hochwertigem Hydrotalcit begünstigt. Letztendlich wird dadurch ein hochwertiger und feinteiliger Hydrotalcit erhalten, der sich beispielsweise besonders gut zur Verwendung als Kunststoffadditiv eignet. Für diese Anwendung werden Hydrotalcite mit einer mittleren Teilchengröße ($D_{50}$) von weniger als etwa 1 $\mu$m und einer $D_{90}$ von maximal 2 bis 3 $\mu$m bevorzugt.

Die Intensivmahlung kann allgemein mit jeder geeigneten Mahlvorrichtung erfolgen, solange die erfindungsgemäßen Parameter eingehalten werden. Bevorzugt wird die Intensivmahlung in einer Nassmühle, insbesondere in einer Perlmühle oder Ringspaltmühle, durchgeführt. Bei der Mahlung wird eine hohe Energiemenge (etwa 0,5 bis 10 kW/Liter, vorzugsweise etwa 1 bis 10 kW/Liter) über die mechanische Energie in das System eingebracht, und diese hohe Energiemenge führt neben der Mahlung/Vermischung auch zu einer chemischen Reaktion, d.h. zu einer Festkörperreaktion, weil sich wahrscheinlich Ionen von der aktivierten Oberfläche ablösen. Im Endstadium der Mahlung kann nach einer bevorzugten Ausführungsform die Energiemenge reduziert werden, z.B. auf 2 bis 5 KW/Liter.

Vorzugsweise wird die Intensivmahlung bei einem pH-Wert im Bereich von etwa 7 bis 13,5 und bei Temperaturen im Bereich von etwa 20 bis 100°C durchgeführt. Bei der Mahlung findet eine Temperaturerhöhung statt.

Nach dem erfindungsgemäßen Verfahren wird zumindest eine der Ausgangskomponenten, d.h. eine Verbindung des zwei- bzw. dreiwertigen Metalls und/oder die Mischung aus den Verbindungen der zwei- und dreiwertigen Metalle der vorstehenden Intensivmahlung unterworfen. Soweit durch die im erfindungsgemäßen Verfahren vorgesehene Intensivmahlung die Ausgangskomponenten zur Hydrotalcitherstellung bereits ausreichend aktiviert wurden, ist in vielen Fällen eine zusätzliche Intensivmahlung bei bzw. nach dem Vermischen der Verbindungen der zwei- und dreiwertigen Metalle nicht mehr erforderlich. Entsprechendes kann gelten, falls nur eine der vorstehenden Komponenten A und B als inaktiver Rohstoff, insbesondere als Suspension, eingesetzt wird, während die andere Komponente in Form einer Lösung verwendet wird.

Nach einer besonders bevorzugten Ausführungsform wird als Verbindung des zweiwertigen Metalls (Komponente A) inaktives Magnesiumoxid eingesetzt und der erfindungsgemäßen Intensivmahlung unterworfen. Als Verbindung des dreiwertigen Metalls (Komponente B) kann dann Aluminiumhydroxid eingesetzt werden, das durch Zugabe von Natronlauge zu Natriumaluminat umgesetzt wird. Eine Intensivmahlung der Natriumaluminatlösung ist somit nicht erforderlich. Das zunächst inaktive Magnesiumoxid wird bei der Intensivmahlung (Nassmahlung) zumindest teilweise in das Hydroxid überführt. Vorzugsweise wird zu diesem Zeitpunkt bereits Kohlendioxid als Carbonatquelle zugeführt. Anschließend erfolgt die Vermischung mit der Verbindung des dreiwertigen Metalls, vorzugsweise der vorstehend erwähnten Natriumaluminatlösung.

Soweit die Intensivmahlung nach einer bevorzugten Ausführungsform während oder nach der Vermischung der Verbindungen der zwei- und dreiwertigen Metalle erfolgt, kann sie vorteilhaft solange fortgesetzt werden, bis eine amorphe oder kristalline Hydrotalcitphase gebildet wird.

Durch eine solche Intensivmahlung der Mischsuspension, die z.B. 1 bis 3 Minuten bei 7 kW/Liter bzw. etwa 10 bis 20 Minuten bei 5 kW/Liter durchgeführt wird, werden neue Phasen gebildet, und zwar zunächst eine amorphe Hydrotalcit-Phase und nur in geringerem Umfang (z.B. 3 bis 4 %) eine kristalline Hydrotalcitphase. Die amorphe Hydrotalcit-Vorläuferphase liegt in einer kleinen Korngröße vor. Bei Erhöhung der eingetragenen Energiemenge, z.B. bei Verlängerung der Mahldauer, erhöht sich der Anteil der kristallinen Hydrotalcitphase.

Es wurde gefunden, dass zur Erzielung guter Ergebnisse bei dem erfindungsgemäßen Verfahren eine Carbonatquelle im Überschuss zugegeben werden muss. Als Überschuss wird hier eine Menge von 1,0 ,bis 2,0 Mol CO2 bzw. Carbonat pro Mol eingesetzte dreiwertige Metalle angesehen. Die Zugabe erfolgt erfindungsgemäß vor oder während der Mischung der Verbindungen des zwei- und dreiwertigen Metalls, in jedem Fall jedoch vor einer ggf. durchgeführten hydrothermalen Nachbehandlung des Ansatzes.

Es wurde überraschend gefunden, dass die Zugabe von Kohlendioxid als Carbonatquelle besonders vorteilhafte Ergebnisse liefert. Alternativ kann das Carbonat auch über die Verwendung einer entsprechend carbonathaltigen Verbindung des zwei- bzw. dreiwertigen Metalles oder durch zusätzliche Zugabe von carbonathaltigen Salzen erfolgen. Jedoch wird die Zugabe von $CO_2$ deutlich bevorzugt. Durch Zugabe von $CO_2$ kann auch der pH-Wert der Suspension der Rohstoffe oder der Mischsuspension auf den gewünschten Wert eingestellt bzw. dort gehalten werden.

Soweit nach einer erfindungsgemäßen Ausführungsform zumindest eine der Komponenten A oder B getrennt durch Intensivmahlung aktiviert wird, erfolgt dies erfindungsgemäß kurz vor der weiteren Umsetzung im erfindungsgemäßen Verfahren. Dadurch soll sichergestellt werden, dass die durch die Intensivmahlung erzielte Aktivierung nicht vor der Umsetzung im erfindungsgemäßen Verfahren durch unerwünschte Reaktionen verloren geht. In der Regel erfolgt daher die Intensivmahlung maximal 5 h vor der weiteren Umsetzung gemäß dem erfindungsgemäßen Verfahren. Dabei wird angenommen, dass die bei der Intensivmahlung gebildeten aktiven Teilchenoberflächen eine Rolle spielen können.

Der Feststoffgehalt der eingesetzten Suspension(en) bzw. der Mischsuspension mit den Verbindungen der zwei- und dreiwertigen Metalle beträgt etwa 30 bis 60 Gew.-%. Diese Grenzen haben sich auch im Hinblick auf die zur Intensivmahlung eingesetzten Vorrichtungen als praktikabel erwiesen.

Ein bevorzugtes erfindungsgemäßes Verfahren zur Herstellung von Hydrotalciten aus Verbindungen von zwei- und dreiwertigen Metallen ist dadurch gekennzeichnet, dass man (a) getrennte Suspensionen aus den unlöslichen Carbonaten, Oxiden und/oder Hydroxiden der zweiwertigen Metalle und den Oxiden oder Hydroxiden der dreiwertigen Metalle, oder (b) eine Mischsuspension dieser Komponenten einer Intensivmahlung bis zum Erreichen einer mittleren Teilchengröße ($D_{50}$) von etwa 1 bis 5$\mu$ unterzieht, wobei man bei Verwendung der Oxide oder Hydroxide der zweiwertigen und der dreiwertigen Metalle vor, während oder nach der Intensivmahlung eine Carbonatquelle zusetzt; im Falle (a) die getrennten Suspensionen miteinander vermischt; wobei man in beiden Fällen die Intensivmahlung solange durchführt, bis eine amorphe Hydrotalcitphase bzw. eine durch ein scharfes Röntgenbeugungsdiagramm gekennzeichnete Hydrotalcitphase auftritt; und das erhaltene Produkt abtrennt, trocknet und gegebenenfalls calciniert.

Die Komponenten A und B werden vorzugsweise bei einer Temperatur von etwa 40 bis 100°C, insbesondere bei etwa 80 bis 90°C, miteinander vermischt.

Die Umsetzung der Mischung der Verbindungen der zwei- und dreiwertigen Metalle (Komponenten A und B) setzt unmittelbar ein. Somit sind Umsetzungszeiten vor der thermalen oder hydrothermalen Weiterverarbeitung zwischen 0 und 48 Stunden in der Regel ausreichend.

Nach einer erfindungsgemäßen Ausführungsform können die Carbonate, Oxide und/oder Hydroxide der dreiwertigen Metalle ganz oder teilweise durch lösliche Salze (z.B. Natriumaluminat) ersetzt werden.

Als Verbindungen der dreiwertigen Metalle werden vorzugsweise Aluminiumhydroxid, aktive Formen des Aluminiumoxids und/oder Natriumaluminat verwendet. Letzteres hydrolysiert in der Suspension, so dass im Ergebnis eine Reaktion zwischen dem gebildeten Aluminiumhydroxid und dem Carbonat des zweiwertigen Metalls stattfindet. Das hierbei gebildete NaOH wird zur Einstellung des pH-Wertes verwendet.

Nach einer weiteren erfindungsgemäßen Ausführungsform können unlösliche Carbonate der zweiwertigen Metalle durch Umsetzung der entsprechenden Oxide und/oder Hydroxide mit löslichen Carbonaten in situ erzeugt werden. Vorzugsweise setzt man mindestens einer der Suspensionen, insbesondere einer Mischsuspension der Oxide oder Hydroxide der zweiwertigen oder dreiwertigen Metalle, Natriumbicarbonat und/oder Natriumcarbonat als Carbonatquelle zu. Hierdurch kann der pH-Wert der Suspension auf den gewünschten Wert eingestellt werden. Dieser liegt vorzugsweise im Bereich von etwa 6 bis 13,5. Diese löslichen Carbonate oder Bicarbonate können auch bei Verwendung der unlöslichen Carbonate der zweiwertigen Metalle zugesetzt werden.

Die amorphe Hydrotalcitphase bzw. die teilweise kristalline Hydrotalcitphase können nach einer Ausführungsform des erfindungsgemäßen Verfahrens einer hydrothermalen Nachbehandlung und/oder einer thermischen Alterung unterzogen werden, worauf das erhaltene Produkt von der Suspension abgetrennt, getrocknet und gegebenenfalls calciniert wird.

Die hydrothermale Nachbehandlung wird im allgemeinen bei einer Temperatur von > 100 bis 200°C über einen Zeitraum von etwa 1 bis 20 Stunden durchgeführt, wobei sich dieser Zeitraum in eine Aufheizphase, eine Haltephase und eine Abkühlphase unterteilt. Die einzelnen Phasen sind von der Größe der Anlage abhängig. Durch die hydrothermale Nachbehandlung erhöht sich der Anteil der durch ein scharfes Röntgenbeugungsdiagramm gekennzeichneten kristallinen Hydrotalcitphase noch weiter, während sich der Anteil der amorphen Hydrotalcit-Vorläuferphase entsprechend vermindert.

Im allgemeinen wird aus den Rohstoffen eine Suspension (Schlempe) mit einem Feststoffgehalt von etwa 30 bis 60 Gew.-% mit einer höheren Verweilzeit durch den Mahlraum der verwendeten Mühle gepumpt. Bei Verwendung einer FRYMA-MS-32-Ringspaltmühle wurde z.B. der Mahlraum zu einem hohen Anteil (bis zu etwa 70 %) mit Mahlkörpern ($Al_2O_3$, $ZrO_2$, Glaskugeln) gefüllt. Die Temperatur der Schlempe liegt zwischen etwa 20 und 100°C, der pH-Wert zwischen etwa 7 und 14. Im Verlauf des Mahlprozesses nimmt die Viskosität der Schlempe zu. Mit zunehmender Verweilzeit im Mahlraum (= steigende Anzahl an Durchläufen oder niedrige Pumprate) werden die Partikel fein gemahlen. Bei einer bevorzugten Ausführungsform wird im allgemeinen eine Korngröße von ungefähr 0,5 bis 1$\mu$m ($D_{50}$-Wert, d.h. 50% der vorhandenen Teilchen haben eine kleinere Korngröße als die angegebene Korngröße) erreicht.

Sofern eine Intensivmahlung der die Komponenten A und B enthaltenden Mischsuspension erfolgt, führt die eingebrachte Energie direkt zur Bildung einer Mischphase aus einem röntgenamorphen und einem kristallinen Hydrotalcit. Letzterer liefert die Kristallisationskeime bei der optionalen weiteren Aufarbeitung durch eine hydrothermale Nachbehandlung. Dieser Verfahrensschritt verläuft im Vergleich zu einer bekannten hydrothermalen Hydrotalcitsynthese deutlich besser (höhere Kristallinität, höhere Ausbeute, kürzere Synthesezeit und bessere Qualität). Durch den vorgeschalteten Intensivmahlprozeß kann somit, wie vorstehend erwähnt, das Gesamtverfahren im Hinblick auf eine höhere Flexibilität bei der Auswahl der Rohstoffe (billigere Rohstoffe) und kürzere Synthesezeiten optimiert werden.

Untersuchungen des Röntgenbeugungsspektrums zeigten, dass der Anteil des kristallinen Hydrotalcits in der Schlempe mit zunehmender Verweilzeit im Mahlraum zunahm. Wird die Schlempe im Kreislauf durch den Mahlraum gepumpt, kann durch die Mahlung auf direktem Wege kristalliner Hydrotalcit hergestellt werden, ohne dass eine hydrothermale Nachbehandlung erforderlich ist. Besonders günstig verläuft der Mahlprozess bei Einsatz von basischen Carbonaten oder Bicarbonaten der zweiwertigen Metalle und von Aluminiumhydroxid.

Statt der hydrothermalen Nachbehandlung oder zusätzlich hierzu kann auch eine Alterungsbehandlung im Temperaturbereich von etwa 90 bis 135°C über einen Zeitraum von 0,1 bis 10 Stunden durchgeführt werden.

Zwei Ausführungsformen des erfindungsgemäßen Verfahrens sind in den beigefügten Figuren näher erläutert. Dabei zeigen:

Fig. 1 ein Verfahrensschema einer ersten Ausführungsform der Erfindung, und

Fig. 2 ein Verfahrensschema einer zweiten Ausführungsform der Erfindung.

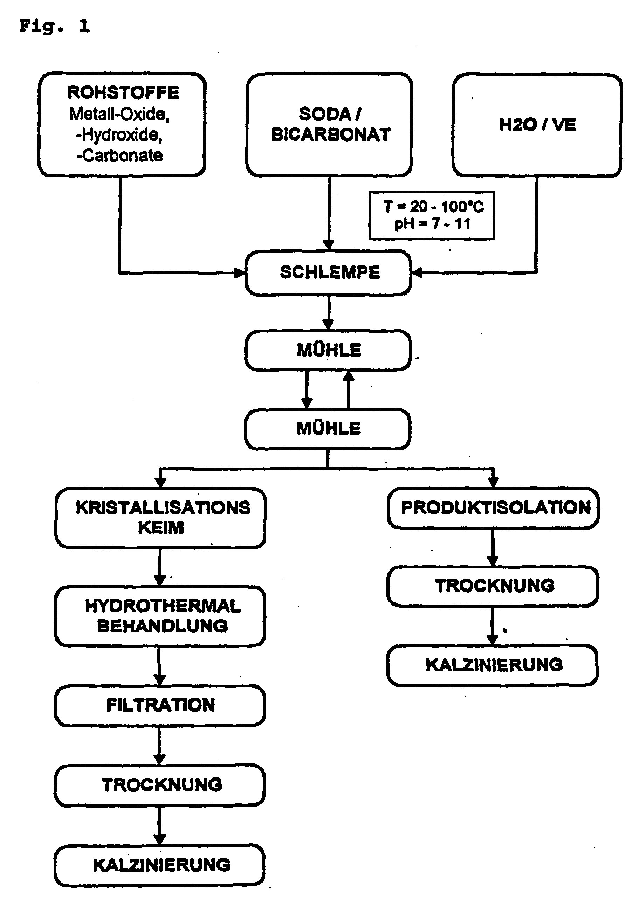

Gemäß Fig. 1 wird zunächst aus den Rohstoffen (Metalloxide, -hydroxide, -carbonate) sowie aus Soda bzw. Bicarbonat und Wasser bei einem pH-Wert von 7 bis 14 eine Schlempe erzeugt, die bei etwa 20 bis 100°C in einer Ringspaltmühle (FRYMA MS32) verarbeitet wird. Je nach dem Mahlungsgrad erhält man entweder überwiegend eine amorphe Hydrotalcitphase mit einem geringen Anteil an kristalliner Hydrotalcitphase (linker Zweig des Verfahrensschemas) oder überwiegend die kristalline Hydrotalcitphase mit einem geringeren Anteil an amorpher Hydrotalcitphase (rechter Zweig des Verfahrensschemas). Im rechten Zweig wird keine hydrothermale Nachbehandlung durchgeführt, und das Produkt wird unmittelbar isoliert, getrocknet und calciniert.

Die amorphe Hydrotalcitphase wird im linken Zweig einer hydrothermalen Nachbehandlung unterzogen, wobei der geringe Anteil an kristalliner Hydrotalcitphase die Kristallisationskeime liefert. Die hydrothermale Nachbehandlung wird im allgemeinen bei Temperaturen im Bereich von etwa 100 bis 200°C und Reaktionszeiten von etwa 1 bis 20 Stunden durchgeführt. Das erhaltene Produkt wird filtriert, getrocknet und gegebenenfalls calciniert.

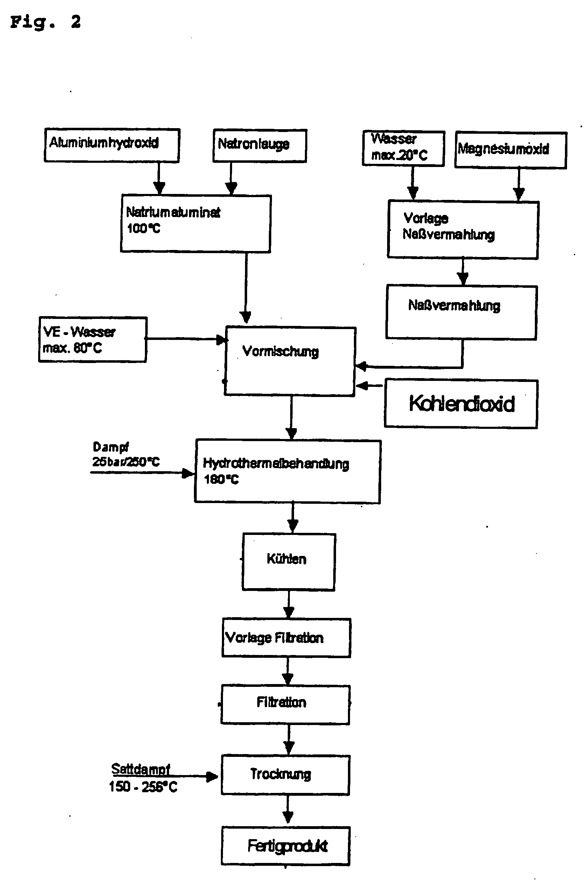

Gemäß Fig. 2 wird zunächst aus Aluminiumhydroxid und Natronlauge bei erhöhter Temperatur (ca. 100°C) eine Natriumaluminatlösung hergestellt. In einem getrennten Behälter werden in kaltem Wasser (max. 20°C) Magnesiumoxid suspendiert. Anschließend erfolgt die erfindungsgemäße Intensivmahlung als Nassmahlung. Dabei erfolgt auch eine zumindest teilweise Umsetzung zu Magnesiumhydroxid. Anschließend erfolgt die Zugabe von Kohlendioxid, wodurch einerseits der pH-Wert gesenkt und auf den gewünschten Bereich zwischen pH 9 und pH 11 eingestellt werden kann. Gleichzeitig wird durch den Überschuss an Kohlendioxid das für die Hydrotalcit-Zwischenschichten erforderliche Carbonat bereitgestellt.

Nach Vermischung der Na-Aluminatlösung mit der wie vorstehend beschrieben behandelten MgO-Suspension zu einer Mischsuspension und deren Umsetzung für ca. 1 Stunde kann sich eine herkömmliche Hydrothermalbehandlung anschließen, um die gewünschte Hydrotalcit-Kristallitgröße zu erzielen. Schließlich erfolgt eine Filtration, dann Trocknung und gegebenenfalls eine Deagglomeration.

Die nach dem Verfahren gemäß der Erfindung erhältlichen Hydrotalcite können insbesondere entweder (a) als Katalysatoren oder Katalysatorträger oder (b) als Füllstoffe und Co-Stabilisatoren für Polymere verwendet werden.

Für die erste Anwendung (a) eignen sich insbesondere die weitgehend amorphen Hydrotalcite, die sich durch hohe Oberflächen (etwa 60 bis 80 m$^2$/g), bestimmt nach BET (DIN 66132), eine ausgeprägte Feinteiligkeit sowie gute Verformungseigenschaften auszeichnen. Für diese Anwendung eignen sich aber auch die bei der hydrothermalen Nachbehandlung erhaltenen Produkte, wenn Katalysatoren bzw. Katalysatorträger mit geringerer Oberfläche und größeren Kristalliten gewünscht werden.

Diese Katalysatoren können für alle Reaktionen eingesetzt werden, bei denen Hydrotalcit-Katalysatoren verwendet wurden. Beispiel sind die Synthese von Glykolethern aus Olefinoxiden (US-A-5,110,992) und die Epoxidierung von Olefinen (US-A-5,260,495). Weitere Reaktionen sind in Chem. Commun., 1998, Seiten 295 bis 296 angegeben.

Für andere Reaktionen können die erfindungsgemäßen Hydrotalcite mit Aktivierungskomponenten, wie Nickel und Edelmetallen, belegt werden. In dieser Form eignen sich die Katalysatoren für Hydrierungen, Dehydrierungen, Alkylierungen usw.

Die erfindungsgemäß erhältlichen kristallinen Hydrotalcite sind für die Verwendung als Füllstoffe besonders gut geeignet, da sie völlig weiß hergestellt werden können, wodurch es gelingt, völlig weiße bzw. durchscheinende polymere Verbundmaterialien zu produzieren. Weiterhin zeigte sich überraschend eine hervorragende Einarbeitbarkeit der nach dem erfindungsgemäßen Verfahren erhältlichen Hydrotalcite in Kunststoffen. Für diesen Zweck kann aber auch je nach Anforderungen im Einzelfall die amorphe Hydrotalcit-Vorläuferphase verwendet werden.

Als Polymerphase für die erfindungsgemäß verwendbaren Nanocomposit-Füllstoffe kommen nahezu alle technisch nutzbaren Polymerwerkstoffe in Frage.

Die Herstellung der Verbundmaterialien aus der Polymermatrix und den fein dispergierten Nanocomposit-Füllstoffen erfolgt nach an sich bekannten Verfahren. Im allgemeinen umfassen diese Verfahren folgende Schrittet

    a) Einarbeitung des Hydrotalcits in ein Monomer, Oligomer oder Polymer, wobei vorzugsweise hochscherende Misch- und Dispergieraggregate verwendet werden;

    b) Gegebenenfalls Durchführung einer Polykondensation, Polymerisation oder einer thermischen bzw. chemischen Vernetzung der Monomere bzw. Oligomere; und

    c) Weiterverarbeitung des erhaltenen Verbundmaterials durch Gießen, Extrudieren und/oder Spritzgießen.

Geeignete Polymere sind z.B. Polyolefine, Polyhalogenkohlenwasserstoffe (z.B. PVC), Epoxide, Polyester, Acrylate, Methacrylate, Polyurethane, Polyharnstoffe, Polyamide, Polycarbonate und Kautschuk:

Als hochscherende Dispergieraggregate kommen schnelllaufende Rührwerke, Kolloidmühlen, Kneter, Extruder und andere Dispergieraggregate in Frage. Die Dispergierung kann bei Raumtemperatur oder bei erhöhter Temperatur erfolgen.

Die erfindungsgemäßen Hydrotalcite eignen sich auch als Co-Stabilisatoren für Polymere, insbesondere für Polyhalogenkohlenwasserstoffe und Olefine. Im ersten Fall fangen sie das bei der Zersetzung entstehende HCl ab. Im letzten Fall verhindern sie die Verfärbungen, die aus Kettenabbau resultieren, der durch Reste der bei der Herstellung der Polyolefine eingesetzten Katalysatoren bedingt ist.

Die Erfindung ist durch die nachstehenden Beispiele erläutert.

Ansatz:

Die Intensivmahlung wurde mit Hilfe einer FRYMA-Ringspaltmühle (Kugelfüllgrad 70%, Pumpeneinstellung 2 bis 4 Liter Suspension/min bei einem Energieeintrag von etwa 7 kW/Liter) durchgeführt.

Es wurden zunächst Vorversuche mit den Rohstoffen ($MgCO_3$, $MgO$, $Al(OH)_3$, basisches $ZnCO_3$, $ZnO$) durchgeführt, um deren Verhalten in der Mühle zu untersuchen und um die Schlempen für die eigentlichen Versuche richtig einzustellen (Feststoffgehalt). In den Vorversuchen wurde nach 3 Passagen (insgesamt 9 min) durch die Mühle für die getrockneten Pulver eine mittlere Korngröße zwischen 1 und 3 $\mu$m (= $D_{50}$-Wert) gemessen. Es wurde weiterhin festgestellt, dass die Viskosität der Schlempe stark zunimmt; teilweise musste die Schlempe mit $H_2O$ verdünnt werden.

Beispiel 1: Intensivmahlung der Mischsuspension mit den Verbindungen der zwei- und dreiwertigen Metalle

Nach den Untersuchungen zum Verhalten der Rohstoffe wurden fünf Versuche in der Ringspaltmühle durchgeführt (Kugelfüllgrad 70%, Pumpeneinstellung 2 bis 7 Liter Suspension/min., Anzahl der Passagen: 5, Probenahme nach der ersten, dritten und fünften Passage zur Bestimmung der Korngröße.

Die Versuchsparameter sind in Tabelle I zusammengefasst.

Tabelle I

| versuch- Nr. | Rohstoffe | Menge [kg] | Schlempe | | Anzahl | pH nach | | | | |
|---|---|---|---|---|---|---|---|---|---|---|
| | | | pH | T (°C) | Passagen | 1. Passage | 2. Passage | 3. Passage | 4. Passage | 5. Passage |
| 1 | MgO | 3,165 | 13,1 | RT | 3 | 13,4 | 13,4 | 12,8 (60°C) | | |
| | Al(OH)$_3$ | 2,925 | | | | | | | | |
| | Soda | 3,06 | | | | | | | | |
| | H$_2$O | 10 | | | | | | | | |
| | zusätzl. H$_2$O (nach 1. Passage) | 4 | | | | | | | | |
| 2 | bas. MgCO$_3$ Al (OH)$_3$ H$_2$O Sodalsg.(17%) Sodalsg.(17%) Sodalsg.(17%) | 7,318 2,925 30 1 0,65 0,85 | 10 | RT | 5 | 9 | 9,8 | 10 | 9,4 | 9,4 |
| | | | | | | pH nach 1. Passage auf 10 eingestellt pH nach 1. Passage auf 10 eingestellt pH nach 1. Passage auf 10 eingestellt | | | | |
| 3 | MgCO$_3$ ZnCO$_3$ Al (OH)$_3$ H$_2$O zusätzl. H$_2$O Sodaleg. (17%) | 5,464 2,242 2,925 29 2 1 | 9,8 | RT | 5 | 8,6 | 9,6 | 9,4 | 9,3 | 9,3 |
| | | | | | | pH nach 1. Passage auf 10 mehr eingestellt, danach eingestellt wurde pH nicht | | | | |
| 4 | MgO ZnO Al(OH)$_3$ Soda H$_2$O zusätzl. H$_2$O | 2,363 1,546 2,925 3,06 10 4 | 13,3 | RT | 5 | 13,1 | pH wurde mit Soda auf 13,1 gehalten | | | 13,1 |
| 5 | Bas. M$_9$CO$_3$ Al (OH)$_3$ H$_2$O | 7,318 2,925 30 | 8,8 | 56 ab 3.Pas. 70 | 5 | | | | | 8,2 |
| RT = Raumtemperatur (20°C) | | | | | | | | | | |

Die Korngrößenverteilungen wurden wie folgt bestimmt:

Es wurde ein Laserbeugungs-Partikelgrößenanalysator der Firma Malvern (Mastersizer) verwendet, mit dessen Hilfe die Teilchengrößenverteilung im Bereich von 0,05 bis 900 μm bestimmt werden kann. Das Gerät arbeitet nach dem Prinzip der Lichtbeugung an kleinen Teilchen.

Zur Probenvorbereitung wurde eine Probe von etwa 50 mg in einem 20 ml-Becherglas mit etwa 10 ml Ethanol versetzt und 5 min. mit einem Ultraschallfinger behandelt. Die Suspension wurde in die Dispergiereinheit des Geräts überführt und so lange Ethanol zugegeben, bis die korrekte Konzentration der Proben am Messgerät eingestellt war. Am Ende der Messung wurden die Ergebnisse sowohl gespeichert, als auch ausgedruckt.

Die Versuchsergebnisse (Korngrößen D50 und D90 vor der hydrothermalen Nachbehandlung) sind in Tabelle II zusammengefasst.

Tabelle II

| Versuch Nr. | Korngrößenverteilung | |
|---|---|---|
| | D50[μ] | D90[μ] |
| 2 | 0,39 | 1,34 |
| 4 | 0,25 | 3,28 |
| 5 | 0,4 | 1,82 |

Beispiel 2: Intensivmahlung des inaktiven Rohstoffs MgO

Es wurden 2 Liter kaltes (20°C) Wasser in einem Einsatzbehälter vorgelegt. Hierin wurden 1667g MgO mit Hilfe eines Pendraulik-Rührers dispergiert.

Kaltes Wasser wurde verwendet, um ein sofortiges Reagieren zu $Mg(OH)_2$ zu verhindern. Die BET-Oberfläche des verwendeten MgO lag bei $3m^2/g$; das Löslichkeitsprodukt in Wasser liegt bei 25°C (pH 7) bei $< 1x10^{-10}$.

Die so erhaltene Magnesiumoxid-Suspension wurde über eine Rührwerkskugelmühle (Perlmühle; Typ: Drais PM-1 RL-V) unter folgenden Bedingungen durchgeführt: 1 Passage; Durchfluss: 125g/min; Füllgrad des Mahlraums: 70% mit $Al_2O_3$-Kugeln (Durchmesser 1 bis 1,5mm); abschließendes Waschen mit 1 Liter Waschwasser; Leistungsaufnahme der Mühle: 0,8 kW; Leistungseintrag: 2,7kW/Liter.

Nach der Intensivmahlung lag die mittlere Teilchengröße bei etwa 0,7 μm ($D_{50}$). Bei der Erwärmung der Suspension erfolgt zumindest teilweise bereits eine Umsetzung zu $Mg(OH)_2$. Der Feststoffgehalt der Suspension liegt bei etwa 30%.

276 g der vermahlenen MgO-Suspension (Mg-Gehalt 17,6%) wurden in 2 Liter VE-Wasser verdünnt.

Es wurde von unten 58,8g $CO_2$ eingeleitet. Das Magnesiumhydroxid setzt sich dabei zumindest teilweise zu Magnesiumcarbonat um. Die Einleitung erfolgt über insgesamt etwa 2 bis 3 Stunden. Der pH-Wert sinkt dabei von etwa pH 11 auf etwa pH 10 ab.

In einem getrennten Behälter werden 70,9g Aluminiumhydroxid in 128g Natronlauge (50% NaOH-Gehalt) bei 100°C unter Bildung von Natriumaluminat gelöst.

Anschließend wird die wie vorstehend gebildete Magnesiumhydroxycarbonatdispersion mit der Na-Aluminatlösung gemischt. Während der Vermischung wird intensiv gerührt. Falls nötig, wird der pH-Wert der Mischsuspension auf etwa pH 11 eingestellt; die Temperatur der Mischsuspension liegt bei etwa 80°C.

Das so erhaltene Produkt kann auf herkömmliche Weise filtriert, gewaschen und getrocknet werden, z.B. durch Sprühtrocknung. Je nach Anforderungen an den erzeugten Hydrotalcit kann sich auch eine herkömmliche Hydrothermalbehandlung anschließen.

Das Röntgendiffraktogramm dieses Produktes zeigt eine reine Hydrotalcitphase.

2. Hydrothermale Nachbehandlung

Jeweils 620g der Schlempen aus Beispiel 1 wurden mit 2 Liter Wasser verdünnt. Die Mischsuspensionen aus Beispiel 2 sowie den Vergleichsbeispielen 1 und 2 (vgl. unten) wurden unverdünnt eingesetzt. In einem gerührten Autoklaven wurden dann diese Mischsuspensionen (Schlempen) in einer Stufe kontinuierlich innerhalb von 2 Stunden auf 180°C aufgeheizt, 6 Stunden bei 180°C gehalten und innerhalb von 10 Stunden auf 80°C abgekühlt. Die erhaltenen Hydrotalcit-Kristalle wurden abfiltriert und bei 140°C getrocknet.

Die entsprechenden Werte für die Produkte nach den Versuchen 3 und 4 aus Beispiel 1 waren wie folgt: innerhalb einer Stunde auf 140°C aufgeheizt, 6 Stunden bei 140°C gehalten, innerhalb von 10 Stunden auf 80°C abgekühlt.

Es wurden die Korngrößenverteilungen (wie vorstehend angegeben) sowie die spezifischen Oberflächen (nach BET; DIN 66131) sowie der Kristallinitätsgrad, ausgedrückt als das Verhältnis zwischen amorpher und kristalliner Hydrotalcitphase nach der Röntgenbeugungsmethode analog ASTM D 396/85, bestimmt. Das Produkt wurde auf Peakhöhe ($h_1$) und Halbwertsbreite des Peaks ($b_1$) (003-Peak bei $2\theta = 11,7°$) im Vergleich zu einem Standard ($h_2$ bzw. $b_2$) ausgewertet.

$$K = \frac{h_2 \times b_2}{h_1 \times b_1}$$

Der so ermittelte Kristallinitätsgrad K ist neben weiteren Eigenschaften der erhaltenen Produkte in Tab. III angegeben.

Die Röntgenbeugungsuntersuchungen zeigten, dass bei allen Versuchen in Abhängigkeit von der Verweilzeit in der Ringspaltmühle Mg/Al-Hydrotalcit bzw. Mg/Zn/A1-Hydrotalcit gebildet wurden. Der Anteil an kristallinen Hydrotalciten nimmt mit der Verweilzeit in der Mühle zu. Die Reflexbreite der Hydrotalcit-Reflexe lässt den Schluss zu, dass sehr kleine Hydrotalcit-Kristalle entstanden sind. Nach 5 Passagen durch die Mühle liegt der $D_{90}$-Wert zwischen 1,8 und 3,3 $\mu$m. Der Einsatz der basischen Carbonate der zweiwertigen Metalle führt zu höheren Anteilen an der kristallinen Hydrotalcit-Phase im Produktgemisch. Bei Verwendung der Oxide musste der pH-Wert der Schlempe immer wieder nachgestellt werden.

Vergleichsbeispiel 1

In einem Autoklav wurden in 2,1 Liter Wasser 84,8 g wasserfreie Soda gelöst. Der Autoklav wurde geschlossen und 23,7 g Kohlendioxid wurden eingeleitet.

Eine Lösung aus 406,6 g $MgCl_2 \cdot 6\ H_2O$ und 121,2 g $AlCl_3$ in 1 Liter Wasser wurde hergestellt. Diese Lösung wurde anschließend nach der Kohlendioxid-Dosierung innerhalb von 2 Stunden in den Autoklav gepumpt.

Die Suspension wurde abfiltriert und chloridfrei gewaschen. Anschließend wurde der verbliebene Rückstand wieder in 3 Liter Wasser aufgeschlämmt, in dem zuvor 84,8 g wasserfreie Soda und 23,7 g Kohlendioxid eingetragen wurden. Diese Suspension wurde dann der Hydrothermalbehandlung wie vorstehend in Punkt 2 beschrieben unterzogen.

Vergleichsbeispiel 2

Die Hydrotalcitsynthese einschliesslich der Hydrothermal-Nachbehandlung wurde entsprechend Beispiel 2 durchgeführt, mit der Ausnahme, dass keine Intensivmahlung durchgeführt wurde. Weiterhin wurde ein entsprechendes MgO wie in Beispiel 2, jedoch mit einer mittleren Teilchengröße von etwa 0,7 $\mu$m, eingesetzt.

Beispiel 3: Verwendung der hergestellten Hydrotalcite als Kunststoffadditiv

In einem Schnellmischer (Fa. Henschel) werden folgende Komponenten eingewogen und bis zu einer Temperatur von 120°C intensiv gemischt:

| | |
|---|---|
| Solvin 271 PC | 2 kg |
| DIDP (stab.) | 1 kg |
| Zinkstearat | 0,1 kg |
| Calciumstearat | 0,2 kg |

Dieses Dryblend wird nach 24 Stunden Ruhezeit für die weiteren Tests verwendet.

110 g des Dryblends und 0,73 g des Hydrotalcits werden bei 180°C 5 Minuten auf einem Walzenkaländer zu einem Walzfell verarbeitet. Die vordere Walze wird mit 15 U/min, die hintere mit 11 U/min betrieben. Der Abstand zwischen den Walzen wird auf 0,4 mm eingestellt.

Vom so erhaltenen Walzfell werden 50 mg herausgeschnitten und in ein Glasröhrchen gegeben. Oben am Röhrchen wird ein Lackmuspapier positioniert, mit dem die ersten Spuren von HCl detektiert werden, die aus dem PVC gespalten werden. Das Glasröhrchen wird bei 200°C in einem Thermoblock gelagert. Die Zeit bis zum erstmaligen Auftreten von HCl-Spuren, erkennbar an der Rotfärbung des Indikatorpapiers, wird bestimmt. Der Wert wird als VDE-Wert bezeichnet.

Tabelle III

| Versuch Nr. | Kornverteilung | | BET [$m^2$/g] | Kristallinitätsgrad | VDE [min] |
|---|---|---|---|---|---|
| | $D_{50}$ | $D_{90}$ | | | |
| 1 (Beispiel 1) | 0,8 | 2,1 | 17 | 100% = Standard 1 | 31 |
| 2 (Beispiel 1) | 0,9 | 3,6 | 15 | 95 % (Std. 1) | 28 |
| 3 (Beispiel 1) | 1,1 | 5,2 | 12 | 80 % (Std. 2) | 18 |
| 4 (Beispiel 1) | 1,0 | 3,9 | 14 | 100% = Standard 2 | 35 |
| 5 (Beispiel 1) | 0,8 | 4,2 | 16 | 90 % (Std. 1) | 30 |
| Beispiel 2 | 0,65 | 1,2 | 16 | 102 % (Std. 1) | 32 |
| Vergleich 1 | 0,82 | 1,4 | 14 | 95 % (Std. 1) | 30 |
| Vergleich 2 | 1,5 | 4,9 | 17 | 70 % (Std. 1) | 16 |

Die vorstehenden Ergebnisse zeigen deutlich, dass sich nach dem erfindungsgemäßen Verfahren besonders vorteilhafte Hydrotalcite herstellen lassen, die selbst den nach der Copräzipitationsmethode hergestellten Produkten bei den VDE-Werten überlegen sind.

**Patentansprüche**

1.  Verfahren zur Herstellung von Hydrotalciten unter Verwendung mindestens einer Verbindung eines zweiwertigen Metalls A (Komponente A) und mindestens einer Verbindung eines dreiwertigen Metalls B (Komponente B), wobei zumindest eine der vorstehenden Komponenten A und/oder B nicht in Form einer Lösung eingesetzt wird, **dadurch gekennzeichnet, dass** man

    (a) zumindest eine der nicht als Lösung eingesetzten Komponenten A und/oder B kurz vor oder während der Vermischung der Komponenten,
    und/oder
    (b) die Mischung mit den Komponenten A und B
    einer Intensivmahlung bis zum Erreichen einer mittleren Teilchengrösse (D50) von etwa 0,1 bis 5 $\mu$m unterzieht, wobei

    der Feststoffgehalt der zur Intensivmahlung eingesetzten Suspension(en) mit den Komponenten A oder B bzw. der Mischsuspension mit beiden Komponenten etwa 30 bis 60 Gew.-% beträgt,
    und
    man vor oder während der Vermischung bzw. Umsetzung der Verbindungen der Komponenten A und B mindestens eine Carbonatquelle, insbesondere Kohlendioxid, in einer Menge von 1,0 bis 2,0 Mol $CO_2$ bzw. Carbonat/ Mol eingesetzte dreiwertige Metalle zuführt,
    und
    man gegebenenfalls nach einer Alterungsbehandlung oder hydrothermalen Behandlung das erhaltene Hydrotalcitprodukt abtrennt, trocknet und gegebenenfalls calciniert.

2.  Verfahren nach Anspruch 1, **dadurch gekennzeichnet, dass** man die Intensivmahlung bis zum Erreichen einer mittleren Teilchengröße ($D_{50}$) im Bereich von etwa 0,5 bis 5 $\mu$m, insbesondere 1 bis 5 $\mu$m, durchführt.

3.  Verfahren nach Anspruch 1 oder 2, **dadurch gekennzeichnet, dass** man die Intensivmahlung bis zum Erreichen einer mittleren Teilchengröße ($D_{50}$) von etwa 3 $\mu$m oder weniger, insbesondere etwa 2 $\mu$m oder weniger, durchführt.

4.  Verfahren nach einem der vorstehenden Ansprüche, **dadurch gekennzeichnet, dass** man die Intensivmahlung bis zum Erreichen einer mittleren Teilchengröße ($D_{90}$) von etwa 1 bis 5 $\mu$m, insbesondere 1,5 bis 4 $\mu$m, besonders bevorzugt 1,5 bis 3,5 $\mu$m, durchführt.

5. Verfahren nach einem der vorstehenden Ansprüche, **dadurch gekennzeichnet, dass** ein feinteiliger, pulverförmiger Hydrotalcit hergestellt wird, vorzugsweise mit einer mittleren Teilchengröße($D_{50}$) im Bereich von etwa 0,1 bis 2 $\mu$m, insbesondere 0,1 bis 1 $\mu$m, besonders bevorzugt 0,5 bis 1 $\mu$m.

6. Verfahren nach einem der vorstehenden Ansprüche, **dadurch gekennzeichnet, dass** die hergestellten Hydrotalcite eine Phasenreinheit von > 90 %, insbesondere > 95 %, besonders bevorzugt > 98 % aufweisen.

7. Verfahren nach einem der vorstehenden Ansprüche, **dadurch gekennzeichnet, dass** zumindest eine der Komponenten A oder B ein Löslichkeitsprodukt im verwendeten Reaktionsmedium bzw. Lösungsmittel, vorzugsweise Wasser, bei 25 Grad Celsius und pH 7, von weniger als $5 \times 10^{-8}$, insbesondere von weniger als $1 \times 10^{-9}$, bevorzugt weniger als $5 \times 10^{-10}$, aufweist, und in Form einer Suspension bzw. Slurry eingesetzt wird.

8. Verfahren nach einem der vorstehenden Ansprüche, **dadurch gekennzeichnet, dass** die Verbindung eines zweiwertigen Metalls ausgewählt ist aus den Carbonaten, Hydroxycarbonaten, Oxiden und/oder Hydroxiden.

9. Verfahren nach einem der vorstehenden Ansprüche, **dadurch gekennzeichnet, dass** die Verbindung eines dreiwertigen Metalls ausgewählt ist aus Oxiden und/oder Hydroxiden.

10. Verfahren nach einem der vorstehenden Ansprüche, **dadurch gekennzeichnet, dass** die Komponente A als zweiwertiges Metall $Mg^{2+}$, $Ca^{2+}$, $Zn^{2+}$, $Mn^{2+}$, $Co^{2+}$, $Ni^{2+}$, $Fe^{2+}$, $Sr^{2+}$, $Ba^{2+}$ und/oder $Cu^{2+}$ enthält.

11. Verfahren nach einem der vorstehenden Ansprüche, **dadurch gekennzeichnet, dass** die Komponente B als dreiwertiges Metall $Al^{3+}$, $Mn^{3+}$, $Co^{3+}$, $Ni^{3+}$, $Cr^{3+}$, $Fe^{3+}$, $Ga^{3+}$, $Sc^{3+}$, $B^{3+}$ und/oder dreiwertige Kationen von Seltenerdenmetallen enthält.

12. Verfahren nach einem der vorstehenden Ansprüche, **dadurch gekennzeichnet, dass** man im Fall b) gemäß Anspruch 1 die Intensivmahlung solange durchführt, bis eine amorphe Hydrotalcitphase bzw. eine durch ein scharfes Röntgenbeugungsdiagramm **gekennzeichnete** Hydrotalcitphase auftritt.

13. Verfahren nach einem der vorstehenden Ansprüche, **dadurch gekennzeichnet, dass** man die Komponenten A und B bei einer Temperatur von etwa 20 bis 100 °C, vorzugsweise von etwa 40 bis 80 °C, miteinander vermischt.

14. Verfahren nach einem der vorstehenden Ansprüche, **dadurch gekennzeichnet, dass** man als Komponente B zumindest teilweise anstelle der Carbonate, Oxide und/oder Hydroxide der dreiwertigen Metalle lösliche Salze einsetzt.

15. Verfahren nach einem der vorstehenden Ansprüche, **dadurch gekennzeichnet, dass** man als Verbindungen der zweiwertigen Metalle die Carbonate, Oxide und/oder Hydroxide des Magnesiums und/oder des Zinks und als Verbindungen der dreiwertigen Metalle Aluminiumhydroxid, aktive Formen des Aluminiumoxids und/oder Natriumaluminat verwendet.

16. Verfahren nach einem der vorstehenden Ansprüche, **dadurch gekennzeichnet, dass** man die unlöslichen Carbonate der zweiwertigen Metalle durch Umsetzung der entsprechenden Oxide und/oder Hydroxide mit löslichen Carbonaten in situ erzeugt.

17. Verfahren nach einem der vorstehenden Ansprüche, **dadurch gekennzeichnet, dass** man mindestens einer der Suspensionen mit den Komponenten A oder B, vorzugsweise der Mischsuspension der Oxide oder Hydroxide der zweiwertigen und der dreiwertigen Metalle, Natriumcarbonat, Natriumbicarbonat oder Kohlendioxid als Carbonatquelle zusetzt.

18. Verfahren nach einem der vorstehenden Ansprüche, **dadurch gekennzeichnet, dass** man als Komponente A Magnesiumoxid als wässrige Suspension einsetzt und vor der Vermischung mit der Komponente B einer Intensivmahlung unterzieht, um das Magnesiumoxid zu aktivieren und Magnesiumhydroxid zu bilden.

19. Verfahren nach einem der vorstehenden Ansprüche, **dadurch gekennzeichnet, dass** als Komponente B eine NatriumaluminatLösung verwendet wird, die durch Vermischen von Natronlauge mit Aluminiumhydroxid hergestellt werden kann.

**20.** Verfahren nach einem der vorstehenden Ansprüche, **dadurch gekennzeichnet, dass** man die Intensivmahlung bei einem pH Wert im Bereich von etwa 7 bis 13,5, insbesondere 9 bis 13 und bei Temperaturen im Bereich von etwa 20 bis 100 °C, insbesondere 40 bis 80 °C durchführt.

**21.** Verfahren nach einem der vorstehenden Ansprüche, **dadurch gekennzeichnet, dass** man die Intensivmahlung in einer Nassmühle, insbesondere in einer Ringspaltmühle oder Perlmühle, durchführt.

**22.** Verfahren nach einem der vorstehenden Ansprüche, **dadurch gekennzeichnet, dass** man die amorphe Hydrotalcitphase bzw. die teilweise kristalline Hydrotalcitphase einer hydrothermalen Nachbehandlung oder einer thermischen Alterung unterzieht und das erhaltene Produkt von der Suspension abtrennt, trocknet und gegebenenfalls calciniert.

**23.** Verfahren nach einem der vorstehenden Ansprüche, **dadurch gekennzeichnet, dass** man die hydrothermale Nachbehandlung bei Temperaturen von etwa > 100 °C bis 200 °C über einen Zeitraum von etwa 1 bis 20 Stunden durchführt.

**24.** Verfahren nach einem der Ansprüche 1 bis 23, wobei der erhaltene Hydrotalcit als Katalysator oder Katalysatorträger weiterverwendet wird.

**25.** Verfahren nach einem der Ansprüche 1 bis 23, wobei der erhaltene Hydrotalcit als Füllstoff und/oder Co-Stabilisator für Polymere weiterverwendet wird.

**Claims**

**1.** A method for the preparation of hydrotalcites using at least one compound of a divalent metal (component A) and at least one compound of a trivalent metal (component B), wherein at least one of the above-mentioned components is not used in its dissolute form, **characterised in that**

a) at least one of the components A and/or B, which is not used in its dissolute form, shortly before or during mixing of the components, and/or
b) the mixture containing the components A and B,

is subjected to intensive grinding until an average particle size ($D_{50}$) of approximately 0.1 to 5 $\mu$m is obtained, wherein the solids content of the suspension(s) used for the intensive grinding with the components A or B and/or the mixed suspension with both components amounts to approximately 30 to 60 % by weight, and, prior or during the mixing and/or conversion of the compounds of the components A and B, at least one carbonate source is added, in particular carbon dioxide, in a quantity of from 1.0 to 2.0 mol of $CO_2$ and/or carbonate per mol of trivalent metal used, and optionally after an ageing treatment or hydrothermal treatment, the resulting hydrotalcite product is separated, dried and, optionally, calcined.

**2.** A method according to Claim 1, **characterised in that** the intensive grinding is carried out until an average particle size ($D_{50}$) in the range of approximately 0.5 to 5 $\mu$m, in particular 1 to 5 $\mu$m, is obtained.

**3.** A method according to Claim 1 or 2, **characterised in that** the intensive grinding is carried out until an average particle size ($D_{50}$) of approximately 3 $\mu$m or less, in particular approximately 2 $\mu$m or less, is obtained.

**4.** A method according to any one of the preceding Claims, **characterised in that** the intensive grinding is carried out until an average particle size ($D_{90}$) of approximately 1 to 5 $\mu$m, in particular 1.5 to 4 $\mu$m, and especially preferably 1.5 to 3.5 $\mu$m, is obtained.

**5.** A method according to any one of the preceding Claims, **characterised in that** a fine-particle, powdery hydrotalcite is prepared, preferably with an average particle size ($D_{50}$) in the range from 0.1 and 2 $\mu$m, in particular between 0.1 and 1 $\mu$m, and especially preferably between 0.5 and 1 $\mu$m.

**6.** A method according to any one of the preceding Claims, **characterised in that** the hydrotalcites prepared have a phase purity of > 90%, in particular > 95%, especially preferably > 98%.

7. A method according to any one of the preceding Claims, **characterised in that** at least one of the components A or B has a solubility product in the reaction medium and/or solvent used, preferably water, at 25°C and a pH of 7, of less than $5 \times 10^{-8}$, in particular of less than $1 \times 10^{-9}$, preferably of less than $5 \times 10^{-10}$, and is used in the form of a suspension or slurry.

8. A method according to any one of the preceding Claims, **characterised in that** the compound of a divalent metal is selected from the carbonates, hydroxycarbonates, oxides and/or hydroxides.

9. A method according to any one of the preceding Claims, **characterised in that** the compound of a trivalent metal is selected from oxides and/or hydroxides.

10. A method according to any one of the preceding Claims, **characterised in that** component A contains, as a divalent metal, $Mg^{2+}$, $Ca^{2+}$, $Zn^{2+}$, $Mn^{2+}$, $Co^{2+}$, $Ni^{2+}$, $Fe^{2+}$, $Sr^{2+}$, $Ba^{2+}$ and/or $Cu^{2+}$.

11. A method according to any one of the preceding Claims, **characterised in that** component B contains, as a trivalent metal, $Al^{3+}$, $Mn^{3+}$, $Co^{3+}$, $Ni^{3+}$, $Cr^{3+}$, $Fe^{3+}$, $Ga^{3+}$, $Sc^{3+}$, $B^{3+}$ and/or trivalent cations of rare earth metals.

12. A method according to any one of the preceding Claims, **characterised in that**, in the case (b) according to Claim 1, the intensive grinding is carried out until an amorphous hydrotalcite phase and/or a hydrotalcite phase occurs, which is **characterised by** a sharp X-ray diffraction pattern.

13. A method according to any one of the preceding Claims, **characterised in that** the components A and B are mixed together at a temperature of approximately 20 to 100°C, preferably of approximately 40 to 80°C.

14. A method according to any one of the preceding Claims, **characterised in that** soluble salts are used as component B, at least partially instead of the carbonates, oxides and/or hydroxides of the trivalent metals.

15. A method according to any one of the preceding Claims, **characterised in that** the compounds of the divalent metals used are carbonates, oxides and/or hydroxides of magnesium and/or zinc, and the compounds of the trivalent metals used are aluminium hydroxide, active forms of aluminium oxide and/or sodium aluminate.

16. A method according to any one of the preceding Claims, **characterised in that** the insoluble carbonates of the divalent metals are produced in situ by converting the corresponding oxides and/or hydroxides with soluble carbonates.

17. A method according to any one of the preceding Claims, **characterised in that** sodium carbonate, sodium bicarbonate or carbon dioxide are added as a carbonate source to at least one of the suspensions with the components A or B, preferably to the mixed suspension of the oxides or hydroxides of the divalent and the trivalent metals.

18. A method according to any one of the preceding Claims, **characterised in that** an aqueous suspension of magnesium dioxide is used as component A and, prior to mixing with component B, is subjected to intensive grinding so as to activate the magnesium dioxide and form magnesium hydroxide.

19. A method according to any one of the preceding Claims, **characterised in that** a sodium aluminate solution is used as component B, which can be prepared by mixing caustic soda with aluminium hydroxide.

20. A method according to any one of the preceding Claims, **characterised in that** the intensive grinding is carried out at a pH value in the range from approximately 7 to 13.5, in particular 9 to 13, and at temperatures in the range of from approximately 20 to 100°C, in particular 40 to 80°C.

21. A method according to any one of the preceding Claims, **characterised in that** the intensive grinding is carried out in a wet mill, in particular in an annular gap mill or bead mill.

22. A method according to any one of the preceding Claims, **characterised in that** the amorphous hydrotalcite phase and/or the partially crystalline hydrotalcite phase is subjected to a hydrothermal aftertreatment or thermal ageing and the product obtained is separated from the suspension, dried and, optionally, calcined.

23. A method according to any one of the preceding Claims, **characterised in that** the hydrothermal aftertreatment is carried out at temperatures of approximately > 100°C to 200°C for a period of approximately 1 to 20 hours.

**24.** A method according to any one of Claims 1 to 23, wherein the hydrotalcite obtained is further used as a catalyst or catalyst support.

**25.** A method according to any one of Claims 1 to 23, wherein the hydrotalcite obtained is further used as a filler and/or co-stabiliser for polymers.

## Revendications

**1.** Procédé de préparation d'hydrotalcites par utilisation d'au moins un composé d'un métal divalent A (composant A) et d'au moins un composé d'un métal trivalent B (composant B)
dans lequel
au moins un des composants A et/ou B n'est pas utilisé sous la forme d'une solution,
**caractérisé en ce que** l'on soumet

(a) au moins un des composants A et/ou B qui ne sont pas utilisés sous la forme d'une solution, peu avant ou pendant le mélangeage des composants,
et/ou
(b) le mélange des composants A et B

à un broyage intensif jusqu'à atteindre une taille moyenne de particules (D50) d'environ 0,1 à 5 $\mu$m, lors de quoi la teneur en solides de la ou des suspension(s) avec les composants A ou B, respectivement de la suspension mixte avec les deux composants, utilisée(s) au broyage intensif, s'élève à environ 30 à 60 % en masse,
et
**en ce que** l'on additionne avant ou pendant le mélangeage, respectivement la réaction des composés des composants A et B, au moins une source de carbonate, en particulier du dioxyde de carbone, en une quantité de 1,0 à 2,0 mole de $CO_2$, respectivement de carbonate, par mole de métaux trivalents utilisé,
et
**en ce que**, le cas échéant après un traitement de vieillissement ou un traitement hydrothermal, l'on sépare le produit hydrotalcite obtenu, qu'on le sèche et qu'on le calcine le cas échéant.

**2.** Procédé selon la revendication 1, **caractérisé en ce que** l'on effectue le broyage intensif jusqu'à atteindre une taille moyenne de particules (D50) dans l'intervalle d'environ 0,5 à 5 $\mu$m, en particulier de 1 à 5 $\mu$m.

**3.** Procédé selon la revendication 1 ou 2, **caractérisé en ce que** l'on effectue le broyage intensif jusqu'à atteindre une taille moyenne de particules (D50) d'environ 3 $\mu$m ou moins, en particulier d'environ 2 $\mu$m ou moins

**4.** Procédé selon l'une quelconque des revendications précédentes, **caractérisé en ce que** l'on effectue le broyage intensif jusqu'à atteindre une taille moyenne de particules (D50) d'environ 1 à 5 $\mu$m, en particulier de 1,5 à 4 $\mu$m, de façon particulièrement préférée de 1,5 à 3,5 $\mu$m.

**5.** Procédé selon l'une quelconque des revendications précédentes, **caractérisé en ce que** l'on produit un hydrotalcite pulvérulent à particules fines, de préférence avec une taille moyenne de particules (D50) dans l'intervalle d'environ 0,1 à 2 $\mu$m en particulier de 0,1 à 1 $\mu$m, de façon particulièrement préférée de 0,5 à 1 $\mu$m.

**6.** Procédé selon l'une quelconque des revendications précédentes, **caractérisé en ce que** les hydrotalcites préparés présentent une pureté de phase de >90 %, en particulier de >95 %, de façon particulièrement préférée de >98 %.

**7.** Procédé selon l'une quelconque des revendications précédentes, **caractérisé en ce qu'**au moins un des composants A ou B présente un produit de solubilité dans le milieu réactionnel, respectivement le solvant utilisé, en particulier de l'eau, à 25 degrés Celsius et pH 7, de moins de 5 x $10^{-8}$, en particulier de moins de 1 x $10^{-9}$, de préférence de moins de 5 x $10^{-10}$, et est utilisé sous forme d'une suspension ou d'une bouillie.

**8.** Procédé selon l'une quelconque des revendications précédentes, **caractérisé en ce que** le composé d'un métal divalent est choisi parmi les carbonates, les hydroxycarbonates, les oxydes et/ou les hydroxydes.

9. Procédé selon l'une quelconque des revendications précédentes, **caractérisé en ce que** le composé d'un métal trivalent est choisi parmi les oxydes et/ou les hydroxydes.

10. Procédé selon l'une quelconque des revendications précédentes, **caractérisé en ce que** le composant A contient comme métal divalent $Mg^{2+}$, $Ca^{2+}$, $Zn^{2+}$, $Mn^{2+}$, $Co^{2+}$, $Ni^{2+}$, $Fe^{2+}$, $Sr^{2+}$, $Ba^{2+}$ et/ou $Cu^{2+}$.

11. Procédé selon l'une quelconque des revendications précédentes, **caractérisé en ce que** le composant B contient comme métal trivalent $Al^{3+}$, $Mn^{3+}$, $Co^{3+}$, $Ni^{3+}$, $Cr^{3+}$, $Fe^{3+}$, $Ga^{3+}$, $Sc^{3+}$, $B^{3+}$ et/ou des cations trivalent de métaux des terres rares.

12. Procédé selon l'une quelconque des revendications précédentes, **caractérisé en ce que** l'on effectue dans le cas (b) selon la revendication 1 le broyage intensif jusqu'à ce qu'il apparaisse une phase amorphe d'hydrotalcite, respectivement une phase d'hydrotalcite **caractérisée par** un diagramme de diffraction des rayons X net.

13. Procédé selon l'une quelconque des revendications précédentes, **caractérisé en ce que** l'on mélange ensemble les composants A et B à une température d'environ 20 à 100 °C, de préférence d'environ 40 à 80 °C.

14. Procédé selon l'une quelconque des revendications précédentes, **caractérisé en ce que** l'on utilise comme composant B, au moins en partie, des sels solubles à la place des carbonates, des oxydes et/ou des hydroxydes des métaux trivalents.

15. Procédé selon l'une quelconque des revendications précédentes, **caractérisé en ce que** l'on utilise comme composés des métaux divalents des carbonates, des oxydes et/ou des hydroxydes de magnésium et/ou du zinc et comme composés des métaux trivalents de l'hydroxyde d'aluminium, des formes actives de l'oxyde d'aluminium et/ou de l'aluminate de sodium.

16. Procédé selon l'une quelconque des revendications précédentes, **caractérisé en ce que** l'on produit les carbonates insolubles des métaux divalents par réaction in situ des oxydes et/ou des hydroxydes correspondants avec des carbonates solubles.

17. Procédé selon l'une quelconque des revendications précédentes, **caractérisé en ce que** l'on ajoute à au moins une des suspensions avec les composants A ou B, de préférence à la suspension mixte des oxydes ou des hydroxydes des métaux divalents et trivalents, du bicarbonate de sodium ou du dioxyde de carbone comme source de carbonate.

18. Procédé selon l'une quelconque des revendications précédentes, **caractérisé en ce que** l'on utilise comme composant A de l'oxyde de magnésium sous forme de suspension aqueuse et qu'on le soumet avant le mélangeage avec le composant B à un broyage intensif pour activer l'oxyde de magnésium et pour former de l'hydroxyde de magnésium.

19. Procédé selon l'une quelconque des revendications précédentes, **caractérisé en ce que** l'on utilise comme composant B une solution d'aluminate de sodium, qui peut être préparée par mélangeage d'une lessive de soude avec de l'hydroxyde d'aluminium.

20. Procédé selon l'une quelconque des revendications précédentes, **caractérisé en ce que** l'on exécute le broyage intensif à un pH dans l'intervalle de 7 à 13,5, en particulier de 9 à 13, et à des températures dans l'intervalle d'environ 20 à 100 °C, en particulier de 40 à 80 °C.

21. Procédé selon l'une quelconque des revendications précédentes, **caractérisé en ce que** l'on effectue le broyage intensif dans un broyeur humide, en particulier un broyeur à entrefer annulaire ou un broyeur à billes agitées.

22. Procédé selon l'une quelconque des revendications précédentes, **caractérisé en ce que** l'on soumet la phase hydrotalcite amorphe, respectivement la phase hydrotalcite partiellement cristalline, à un traitement ultérieur hydrothermal ou à un vieillissement thermique et que l'on sépare le produit obtenu de la suspension, qu'on le sèche et qu'on le calcine le cas échéant.

23. Procédé selon l'une quelconque des revendications précédentes, **caractérisé en ce que** l'on effectue le traitement hydrothermal ultérieur à des températures d'environ >100 °C à 200 °C sur un laps de temps d'environ 1 à 20 heures.

**24.** Procédé selon l'une quelconque des revendications 1 à 23, l'hydrotalcite obtenu étant utilisé comme catalyseur ou comme support de catalyseur.

**25.** Procédé selon l'une quelconque des revendications 1 à 23, l'hydrotalcite obtenu étant utilisé comme charge et/ou comme co-stabilisateur pour des polymères.

**Fig. 1**

**Fig. 2**

```
┌─────────────────────┐   ┌─────────────────┐        ┌─────────────────┐   ┌─────────────────┐
│ Aluminiumhydroxid   │   │ Natronlauge     │        │ Wasser          │   │ Magnesiumoxid   │
└─────────────────────┘   └─────────────────┘        │ max.20°C        │   └─────────────────┘
                                                      └─────────────────┘
           ┌─────────────────────┐                        ┌─────────────────────┐
           │ Natriumaluminat     │                        │ Vorlage             │
           │ 100°C               │                        │ Naßvermahlung       │
           └─────────────────────┘                        └─────────────────────┘

                                                          ┌─────────────────────┐
                                                          │ Naßvermahlung       │
  ┌─────────────────┐      ┌─────────────────────┐        └─────────────────────┘
  │ VE - Wasser     │      │                     │
  │ max. 80°C       │─────▶│ Vormischung         │◀───────
  └─────────────────┘      │                     │◀──────  ┌─────────────────┐
                           └─────────────────────┘         │ Kohlendioxid    │
                                                           └─────────────────┘
  ┌─────────────┐      ┌─────────────────────────┐
  │ Dampf       │      │ Hydrothermalbehandlung  │
  │ 25bar/250°C │─────▶│ 180°C                   │
  └─────────────┘      └─────────────────────────┘

                           ┌─────────────────┐
                           │ Kühlen          │
                           └─────────────────┘

                           ┌─────────────────┐
                           │ Vorlage Filration│
                           └─────────────────┘

                           ┌─────────────────┐
                           │ Filtration      │
                           └─────────────────┘
  ┌─────────────┐      ┌─────────────────┐
  │ Sattdampf   │      │ Trocknung       │
  │ 150 - 256°C │─────▶└─────────────────┘
  └─────────────┘
                           ┌─────────────────┐
                           │ Fertigprodukt   │
                           └─────────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2061114
- US 5399329 A
- US 5578286 A
- EP 0117289 A1
- WO 0112570 A
- US 5110992 A
- US 5260495 A

**In der Beschreibung aufgeführte Nicht-Patentliteratur**

- *Catalysis Today,* 1991, vol. 11 (2), 173-301
- **V.P. ISUPOV ; L.E. CHUPAKHINA ; R.P. MITRO-FANOVA.** *J. Mater. synth. Proc.,* 2000, vol. 8 (3/4), 251-253
- **V. FIGUSCH ; E. BURIANOVA.** *Proceedings of the First International Conference on Mechanochemis-try,* 81-85
- *Chem. Commun.,* 1998, 295-296